# EUROPEAN PATENT SPECIFICATION

(11) **EP 3 046 411 B1**
(45) Date of publication and mention of the grant of the patent: **24.04.2019**
(21) Application number: 14758403.1
(22) Date of filing: 03.09.2014
(51) Int. Cl.: A01K 5/01, A01K 15/02

(54) **BOWL FOR FEEDING PETS**
HAUSTIERFUTTERNAPF
GAMELLE POUR ANIMAUX DOMESTIQUES

(30) Priority: 17.09.2013 DE 102013015350
(43) Date of publication of application: 27.07.2016
(73) Proprietor: Mars Incorporated, McLean, VA 22101-3883 (US)
(72) Inventor: WITHOPF, Andrea, 27308 Kirchlinteln (DE)
(74) Representative: Scholz, Volker
(86) International application number: PCT/EP2014/068706
(87) International publication number: WO 2015/039867

(56) References cited:
- DE-U1- 20 313 085
- US-A1- 2009 314 221
- US-A1- 2012 298 044
- US-A1- 2012 325 157
- US-B1- 6 167 841

## Description

The present invention relates to a bowl for feeding pets.

Pets have to be fed. This is normally done by placing a measured quantity of food in a bowl standing more or less fixed in place, which the pet then eats. With this kind of feeding, it can easily happen that too much food is taken, so that the pet becomes overweight and has too little exercise. In addition, many pets eat too quickly, which can cause vomiting.

Also, many pets are not given sufficient mental challenges.

US2012/0298044 A1 discloses a feeding toy for pets which is constructed from two hemispheres, wherein feeding apertures are provided in a lower hemisphere, via which pieces of food are dispensed by means of a defined dispensing mechanism, which has to be triggered by the pet. In that feeding toy, the feeding apertures do not permit the pet access to the interior of the hemispheres; instead, when the dispensing mechanism is actuated, the food falls out of the feeding apertures. In addition, the food inside the feeding toy cannot be detected visually by a pet.

2010/0095902 A1 describes a pet toy that is constructed from a flexible and axially flat body with a hollow formed therein. Pet food can be placed in that hollow, where the pet can retrieve it via a narrow opening. In that pet toy too, the interior is not accessible to the pet; when

the toy is held in the right position, the food falls out of the narrow opening. In addition, the pet food inside this pet toy can only inadequately be detected visually by the pet.

US 6,167,841 B1 discloses a pet food feeding apparatus, which includes a bowl-like base having a flat bottom wall, a hollow top cover shell covered on the base, the top cover shell having a plurality of outlets spaced around the periphery, a pan mounted inbetween the base and the top cover shell to hold pet food and a weight fixedly fastened to the base at the center for enabling the center of gravity of the pet food feeding apparatus to be kept at the center of the flat bottom wall of the base.

US 2009/0314221 A1 discloses a pet toy adapted for dispensing treats when the pet toy is manipulated by a pet animal. The pet toy can include a housing having an interior surface defining a treat cavity for containing pet treats. The housing includes at least a first housing aperture. A rotatable lid is attached to the housing and is disposed over the first housing aperture where the rotatable lid includes at least first lid aperture such that the rotatable lid can be rotated to expose the first housing aperture for the passage of treats through the housing.

US 2012/0298044 A1 discloses a feeder toy for cats and small dogs. The device is formed from a non-toxic, eco-friendly food grade plastic. The rounded, weighted profile provides a self-prepared motion, eliminating the need for any batteries. The design wobbles and moves about the floor, forcing a pet to move and interact with the toy in order to eat.

It is an object of the present invention to provide a bowl for feeding pets with which feeding can be controlled better, especially extended over a longer time, and at the same time the pet is presented with a mental challenge to retrieve the pet food from that bowl.

This object is achieved by a bowl comprising:
a) a bowl main body with a rocking member joined to the bottom thereof, and
b) a releasable transparent lid joined to the upper side of the bowl main body and having at least one opening,
wherein the lid has a flat or hood-like upper surface and a side rim running round the upper surface and extending substantially downwards, wherein the at least one opening extends above the upper surface and the side rim of the lid.

It is particularly preferable in this connection that the bowl main body and/or the lid should be made of plastic, preferably thermoplastic plastic.

It is also preferably contemplated that the rocking member is releasable from the bowl main body.

In a preferred embodiment, it is contemplated that the rocking member is made of plastic, preferably thermoplastic plastic, and is weighed down with a weight.

It is further preferably contemplated that the rocking member is substantially hemispherical in shape.

In a preferred embodiment, it is contemplated that the lid has one, two or three openings.

It is also preferably envisaged that at least one opening permits access to the bowl for a paw of a pet, preferably a cat's.

One embodiment is characterised by the fact that the lid and/or the rocking member can be screwed together with the bowl main body by means of a thread or connected to it by means of a snap connection.

It has surprisingly been found that with the bowl in accordance with the invention, which is filled with pet food, a pet's feeding can be controlled and in particular extended, and at the same time the pet is presented with a mental challenge to retrieve the pet food from that bowl.

For the pet, the pet food contained in the bowl is visible through the transparent lid, but it is not easy to remove from the bowl. Rather, the pet has to realise that one or more openings are provided in the transparent lid, which are preferably of a size that at least one of the openings allows access for a pet's paw. In order to gain access to the interior of the bowl, the pet therefore has to find out that the interior of the bowl is accessible for a paw and, if successful, can remove pet food from that bowl. It is made more difficult to remove by the fact that the bowl of the invention rocks or wobbles. This is achieved by the rocking member provided on the bottom of the bowl main body. That rocking member is preferably hemispherical in shape and is preferably weighed down with a weight, so that the bowl is always maintained in an upright position when not subjected to an intervention by the pet. Depending on the desired amount of rocking, which can preferably be adjusted to suit the size of the pet, the rocking member can be selected by joining on a suitable rocking member with a flatter or deeper shape.

The lid has a substantially flat or hood-like upper surface, from which a peripheral side rim extends downwards. The at least one opening extends above part of the upper surface and part of the peripheral side rim. This ensures that the pet can introduce its paw relatively into the interior of the bowl easily and without major contortions and, after grabbing the piece of food, can withdraw its paw, together with the piece of food, from the bowl with no difficulty.

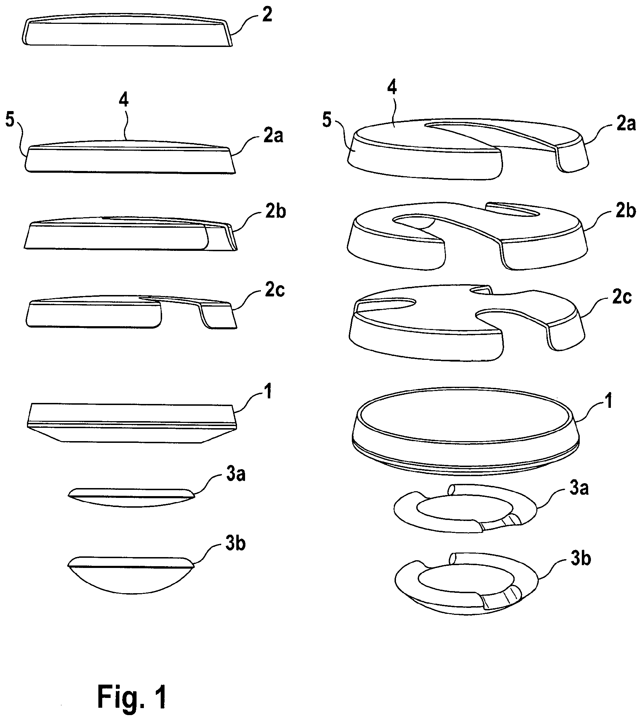

Further features and advantages of the bowl of the invention will become clear from the following detailed description of a worked embodiment with reference to the attached drawing, in which Figure 1 shows components of the bowl in a perspective and exploded side view.

In Figure 1 the reference numeral 1 designates a bowl main body. The shape of the bowl main body 1 does not have to satisfy any particular requirements, except of course that it has to be possible for pet food to be placed in the interior of the bowl main body 1. The bowl main body 1 can likewise be transparent.

The bowl main body 1 can be closed with a lid 2. In Figure 1, three embodiments of the lid 2a, 2b, 2c are shown, with one opening, two openings and three openings respectively. The lid 2 is preferably configured with an upper surface and a peripheral side wall 5 extending downwards, wherein at least one of the openings extends both over the upper surface 4 and over the peripheral side wall 5. This shape of the opening makes it easier for the pet, having introduced a paw into the bowl, to remove pet food from the bowl.

Finally, the bowl of the invention comprises a rocking member 3, two embodiments of which are likewise shown in Figure 1. A first embodiment in the form of a shallow rocking member 3a provides a limited rocking and wobbling movement, and an embodiment 3b with a deeper rocking member enables more pronounced rocking.

The bowl main body 1, the lid 2 and the rocking member 3 can be fitted together in a way that is known *per se* in the art. They could, for example, be screwed together using the thread provided, or the components could be joined together by means of a snap connection.

The features of the invention disclosed in the above description, the claims and the drawings can be essential to implementing the invention in its various embodiments both individually and in any combination at all.

## Claims

1. A bowl comprising:
a) a bowl main body (1) with a rocking member (3a, 3b) joined to the bottom thereof, and
b) a releasable transparent lid, (2) joined to the upper side of the bowl main body (1) and having at least one opening,
wherein the lid (2) has a flat or hood-like upper surface (4) and a side rim running peripherally round the upper surface and extending substantially downwards, wherein the at least one opening extends above the upper surface (4) and the side rim of the lid (2).

2. The bowl as claimed in claim 1, **characterised in that** the bowl main body and/or the lid is/are made of plastic, preferably thermoplastic plastic.

3. The bowl as claimed in either of claims 1 or 2, **characterised in that** the rocking member is releasable from the bowl main body.

4. The bowl as claimed in any of the preceding claims, **characterised in that** the rocking member is made of plastic, preferably thermoplastic plastic, and is weighed down with a weight.

5. The bowl as claimed in any of the preceding claims, **characterised in that** the rocking member is substantially hemispherical in shape.

6. The bowl as claimed in any of the preceding claims, **characterised in that** the lid has one, two or three openings.

7. The bowl as claimed in any of the preceding claims, **characterised in that** at least one opening permits access to the bowl for a paw of a pet, preferably a cat's.

8. The bowl as claimed in any of the preceding claims, **characterised in that** the lid and/or the rocking member can be screwed together with the bowl main body by means of a thread or connected to it by means of a snap connection.

## Patentansprüche

1. Schale, umfassend:
a) einen Schalenhauptkörper (1) mit einem am Boden desselben angefügten Schaukelelement (3a, 3b), und
b) einen lösbaren transparenten Deckel (2), der an der Oberseite des Schalenhauptkörpers (1) angefügt ist und wenigstens eine Öffnung aufweist,
wobei der Deckel (2) eine plane oder eine haubenförmige obere Fläche (4) und einen um die obere Fläche umlaufenden, im Wesentlichen sich nach unten erstreckenden Seitenrand aufweist, wobei sich die wenigstens eine Öffnung über die obere Fläche (4) und den Seitenrand des Deckels (2) erstreckt.

2. Schale nach Anspruch 1, **dadurch gekennzeichnet, dass** der Schalenhauptkörper und/oder der Deckel aus Kunststoff, vorzugsweise thermoplastischem Kunststoff, hergestellt ist bzw. sind.

3. Schale nach Anspruch 1 oder 2, **dadurch gekennzeichnet, dass** das Schaukelelement von dem Schalenhauptkörper lösbar ist.

4. Schale nach einem der vorangehenden Ansprüche, **dadurch gekennzeichnet, dass** das Schaukelelement aus Kunststoff, vorzugsweise thermoplastischem Kunststoff, hergestellt ist und mit einem Gewicht beschwert ist.

5. Schale nach einem der vorangehenden Ansprüche, **dadurch gekennzeichnet, dass** das Schaukelelement eine im Wesentlichen Halbkugelform aufweist.

6. Schale nach einem der vorangehenden Ansprüche, **dadurch gekennzeichnet, dass** der Deckel eine, zwei oder drei Öffnungen aufweist.

7. Schale nach einem der vorangehenden Ansprüche, **dadurch gekennzeichnet, dass** zumindest eine Öffnung einen Zugang zur Schale für eine Pfote eines Haustieres, bevorzugt einer Katze, erlaubt.

8. Schale nach einem der vorangehenden Ansprüche, **dadurch gekennzeichnet, dass** der Deckel und/oder das Schaukelelement mit dem Schalenhauptkörper über ein Gewinde verschraubbar oder mit einer Schnappverbindung verbindbar ist.

## Revendications

1. Gamelle comprenant :
a) un corps principal de gamelle (1) avec un élément de basculement (3a, 3b) attaché au fond de celle-ci, et
b) un couvercle transparent amovible (2) attaché au côté supérieur du corps principal de la gamelle (1) et ayant au moins une ouverture,
ce couvercle (2) ayant une surface supérieure plate ou bombée (4) et un rebord latéral encerclant la surface supérieure de manière périphérique et s'étendant essentiellement vers le bas, l'au moins une ouverture s'étendant au-dessus de la surface supérieure (4) et du rebord latéral du couvercle (2).

2. Gamelle selon la revendication 1, **caractérisée en ce que** le corps principal et/ou le couvercle de cette gamelle sont faits en plastique, de préférence en plastique thermoplastique.

3. Gamelle selon soit la revendication 1, soit la revendication 2, **caractérisée en ce que** l'élément de basculement peut être enlevé du corps principal de la gamelle.

4. Gamelle selon l'une quelconque des revendications précédentes, **caractérisée en ce que** l'élément de basculement est fait en plastique, de préférence en plastique thermoplastique, et **en ce qu'**il est alourdi avec un poids.

5. Gamelle selon l'une quelconque des revendications précédentes, **caractérisée en ce que** l'élément de basculement est essentiellement hémisphérique.

6. Gamelle selon l'une quelconque des revendications précédentes, **caractérisée en ce que** le couvercle a une, deux ou trois ouvertures.

7. Gamelle selon l'une quelconque des revendications précédentes, **caractérisée en ce qu'**au moins une ouverture permet l'accès à la gamelle avec une patte d'un animal domestique, de préférence celle d'un chat.

8. Gamelle selon l'une quelconque des revendications précédentes, **caractérisée en ce que** le couvercle et l'élément de basculement peuvent être vissés ensemble avec le corps principal de la gamelle au moyen d'un filetage ou être rattachés à celui-ci au moyen d'un assemblage par encliquetage.
